# EUROPEAN PATENT APPLICATION

(11) **EP 3 248 819 A1**
(43) Date of publication of application: **29.11.2017**
(21) Application number: 16740134.8
(22) Date of filing: 19.01.2016
(51) Int. Cl.: B60H 1/32, B60H 3/06

(54) **VEHICULAR AIR CONDITIONING DEVICE**

(30) Priority: 21.01.2015 JP 2015009278
(71) Applicant: Valeo Japan Co., Ltd., Saitama 360-0193 (JP)
(72) Inventor: SUZUKI, Yukio, Kumagaya-shi Saitama 360-0193 (JP); NAGANO, Hideki, Kumagaya-shi Saitama 360-0193 (JP); MURASE, Masayuki, Kumagaya-shi Saitama 360-0193 (JP); HAYASHI, Naoto, Kumagaya-shi Saitama 360-0193 (JP)
(74) Representative: Metz, Gaëlle
(86) International application number: PCT/JP2016/051362
(87) International publication number: WO 2016/117527

(57) **Abstract**

In a vehicular air conditioning device (1) including an air conditioning case (5) having an air passage (4) therein, a cooling heat exchanger (7) disposed in the air passage, the heat exchanger exchanging heat between blown air flowing through the air passage and a heat medium, a cooling medium supplying sub pipe (71) and a cooling medium recovering sub pipe (72) connected to the cooling heat exchanger, the cooling medium supplying sub pipe and the cooling medium recovering sub pipe supplying the heat medium to and recovering the heat medium from the outside, and an air filter (8) disposed in the air passage, and the air filter being attachable to and detachable from the air conditioning case, in which the cooling medium supplying sub pipe and the cooling medium recovering sub pipe have overlapping sections, respectively, included in an attachment and detachment path of the air filter and the overlapping sections are disposed in parallel with an attachment and detachment direction of the air filter (8).

## Description

### Technical Field

The present invention relates to a vehicular air conditioning device, more particularly to a vehicular air conditioning device for which the workability of attachment and detachment of a filter is improved.

### Background Art

As conventional devices of this type, there are proposed and commercialized various devices having structures in which, for example, reduction in the installation space in a vehicle, sharing of components for various vehicles, and the like are considered. There is a well-known vehicular air conditioning device of a so-called center-placed type in which, for example, a blower unit, a heat exchanger, and the like are disposed substantially in the same position in the width direction of a vehicle to achieve the compactness of the device (see, for example, PTL 1 and the like).

There is a widely used technique that disposes a filter upstream of a heat exchanger and makes the filter attachable to and detachable from a vehicular air conditioning device.

However, in the vehicular air conditioning device of the center-placed type described above, in order to accommodate individual components by eliminating excess space, there is a case in which, for example, pipes of the heat exchanger and the like need to be disposed so as to have overlapping sections included as part of an attachment and detachment path of the filter.

This structure is adopted on the assumption that the filter can be contracted, a worker can reduce the filter to any size within a certain range, and pipes included in part of the attachment and detachment path can be avoided in attachment or detachment.

### Citation List

### Patent Literature

PTL 1 : JP-UM-A-5-95625 (Fig. 4 on page 3 and Fig. 7 on page 4)

### Summary of Invention

### Technical Problem

By the way, such a conventional device above is provided with a pipe for supplying a heat medium such as a cooling medium or hot water from an engine room to the heat exchanger and a pipe for recovering the heat medium and these pipes are disposed in the vicinity of the wall surface of a case of the air conditioning device to suppress an increase in the size of the air conditioning device. In this case, in the vehicular air conditioning device of the center-placed type, the pipes are disposed so as to extend in the front and rear direction of the vehicle and are arranged in the up and down direction on the wall surfaces in the left and right direction of the air conditioning device. That is, the plurality of pipes having overlapping sections overlapping with the attachment and detachment path of the filter are disposed in a direction in which the filter is contracted, that is, in the up and down direction (direction orthogonal to the width direction of the vehicle).

Accordingly, in the attachment and detachment work of the filter, although the worker needs to contract the filter by the amount corresponding to the plurality of pipes in the up and down direction described above, it is also necessary to prevent the filter from being contracted in the attachment and detachment work. This is because, as the contraction ratio of the filter increases, the possibility of occurrence of a defect increases (for example, the filter is likely to be damaged, dust is likely to be scattered from the filter having collected dust, or deodorant particles provided in the filter are likely to be scattered).

The invention addresses the above problems by providing a vehicular air conditioning device having the pipe disposition structure that minimizes the reduction range of a filter required when the filter is attached and detached in a vehicular air conditioning device having a structure in which pipes of a heat exchanger and the like cannot be avoided in a path for attaching and detaching the filter.

### Solution to Problem

To achieve the above object, a vehicular air conditioning device according to the invention includes a case having an air passage therein, a heat exchanger disposed in the air passage, the heat exchanger exchanging heat between blown air flowing through the air passage and a heat medium, a plurality of pipes supplying the heat medium to and recovering the heat medium from the heat exchanger, and a filter disposed in the air passage, the filter being attachable to and detachable from the case, in which the plurality of pipes have overlapping sections, respectively, included in an attachment and detachment path of the filter and the overlapping sections of the plurality of pipes are disposed in parallel with an attachment and detachment direction of the filter.

According to the invention, since the overlapping sections of the pipes included in the attachment and detachment path of the filter are disposed in parallel with the attachment and detachment direction of the filter, the region occupied by the pipes in the direction in which the filter is contracted is reduced when the filter is attached and detached and the reduction range when the filter is attached and detached can be reduced as compared with the conventional vehicular air conditioning device, thereby obtaining the effect of reducing the mechanical loads on the filter in replacement of the filter.

### Brief Description of the Drawings

[Fig. 1] Fig. 1 is a longitudinal cross sectional view illustrating an air conditioning unit included in a vehicular air conditioning device according to an embodiment of the invention together with pipes through which a cooling medium is supplied and recovered.
[Fig. 2] Fig. 2 is an explanatory diagram illustrating the positional relationship between the pipes in the embodiment of the invention.

### Description of Embodiments

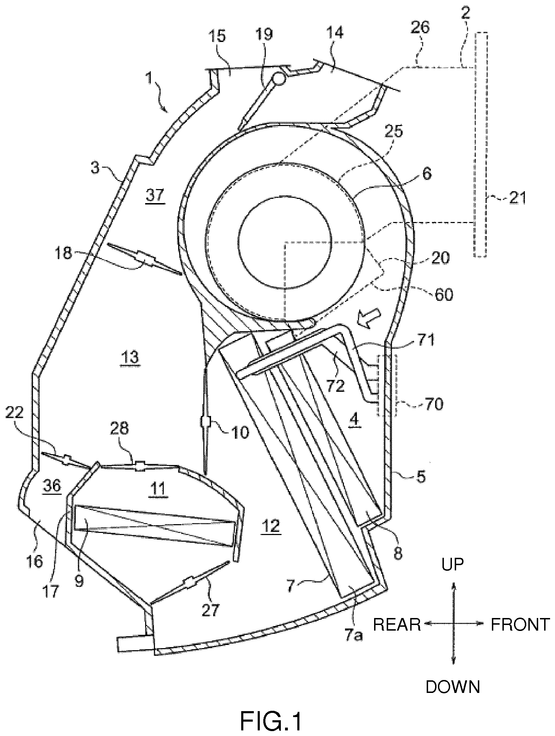

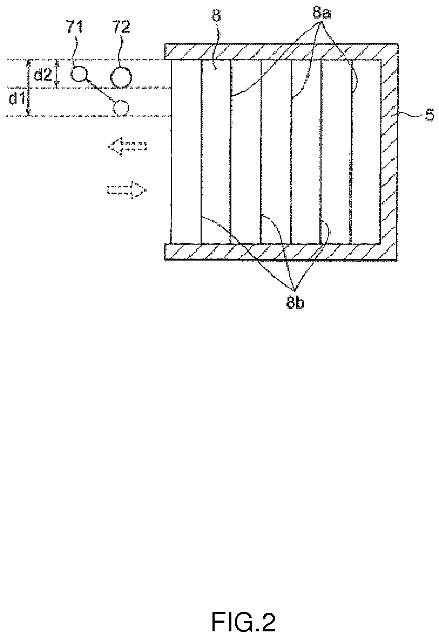

The embodiment of the invention will be described below with reference to Figs. 1 and 2.

The components, disposition, and the like described below do not limit the invention and various modifications may be made within the scope of the spirit of the invention.

First, the entire structure of a vehicular air conditioning device 1 according to the embodiment of the invention will be described.

The vehicular air conditioning device 1 according to the embodiment of the invention is referred to as a vertical full-center-placed type to be mounted in a center console part of a vehicle. The vehicular air conditioning device 1 is disposed closer to a vehicle cabin than a partition separating an engine room of a vehicle from the vehicle cabin and mainly includes an intake unit 2 and an air conditioning unit 3.

In an air conditioning case 5 having an air passage 4 therein, the air conditioning unit 3 has a blower unit 6, a cooling heat exchanger 7 such as an evaporator, an air filter 8, a heating heat exchanger 9 such as a heater core in substantially the same position in the width direction (the direction orthogonal to the sheet in Fig. 1) of the vehicle along the air passage 4.

In an air mix chamber 13, formed in the air conditioning case 5, that mixes cold air with hot air, a first air mix door 10 for adjusting the amount of air having passed through the cooling heat exchanger 7 and a second air mix door 28 for adjusting the amount of air having passed through the heating heat exchanger 9 are provided. In addition, a sub mix door 27 for adjusting the amount of air passing through the heating heat exchanger 9 is provided upstream of the heating heat exchanger 9.

The blower unit 6 is inserted and disposed, in the left and right direction (the direction orthogonal to the sheet in Fig. 1) of the vehicle, into an opening (not illustrated) passing through the air conditioning case 5 in the left and right direction of the vehicle so that the blower unit 6 falls sideways along a driving shaft of a motor (not illustrated). In addition, the blower unit 6 is disposed immediately above the cooling heat exchanger 7 with the blower unit 6 and the cooling heat exchanger 7 close to each other.

The air filter 8 is disposed upstream of the cooling heat exchanger 7 in parallel with the cooling heat exchanger 7. This air filter 8 is attachable to and detachable from the air conditioning case 5. In this example, the air filter 8 is attachable and detachable in one of the left and right directions (the directions orthogonal to the sheet in Fig. 1) of the vehicle of the air conditioning case 5. In the air conditioning case 5, a filter cover (not illustrated) for covering an attachment and detachment opening of the air filter 8 is provided to prevent the conditioned air of the vehicular air conditioning device 1 from leaking outside the air conditioning case 5.

The cooling heat exchanger 7, a compressor (not illustrated), a condenser (not illustrated), and the like are coupled via pipes to configure a refrigeration cycle.

That is, in an outside space of the air conditioning unit 3, such as the engine room, a cooling medium supplying external pipe (not illustrated) and a cooling medium recovering external pipe (not illustrated) through which a cooling medium is supplied to and recovered from the cooling heat exchanger 7 are provided. In the appropriate part of the air conditioning unit 3 facing the front direction of the vehicle, a block type expansion device 70 is provided and the cooling medium supplying external pipe and the cooling medium recovering external pipe described above are connected to the block type expansion device 70. The expansion device 70 is connected to the cooling heat exchanger 7 via a cooling medium supplying sub pipe 71 and a cooling medium recovering sub pipe 72.

This enables the high-pressure cooling medium discharged from the compressor to be radiated in the condenser, be guided to the expansion device 70 via the cooling medium supplying external pipe, undergo adiabatic expansion, be guided to the cooling heat exchanger 7 via the cooling medium supplying sub pipe 71, absorb heat from air flowing through the air passage 4, and return to the compressor via the cooling medium recovering sub pipe 72, the expansion device 70, and the cooling medium recovering external pipe. Since the small-volume cooling medium condensed by the condenser flows through the cooling medium supplying external pipe and the cooling medium supplying sub pipe 71, their diameters are relatively small. In contrast, since the large-volume cooling medium having absorbed heat in the cooling heat exchanger 7 flows through the cooling medium recovering sub pipe 72 and the cooling medium recovering external pipe, their diameters are relatively large.

The heating heat exchanger 9, an engine (not illustrated), a pump (not illustrated), and the like are coupled via pipes to configure a heating cycle.

That is, in an outside space of the air conditioning unit 3, such as the engine room, a hot water supplying external pipe (not illustrated) and a hot water recovering external pipe (not illustrated) through which hot water is supplied to and recovered from the heating heat exchanger 9 are provided. In the appropriate part of the air conditioning unit 3 facing the front direction of the vehicle, one end of a hot water supply sub pipe (not illustrated) is disposed and connected to the hot water supplying external pipe. Similarly, in the appropriate part of the air conditioning unit 3 facing the front direction of the vehicle, one end of a hot water recovering sub pipe (not illustrated) is disposed and connected to the hot water recovering external pipe.

This enables the heat medium heated by the exhaust heat of an engine to flow via a pump, be guided to the heating heat exchanger 9 via the hot water supplying external pipe and the hot water supply sub pipe, be radiated to air flowing through the air passage 4, and return to the engine via the hot water recovering sub pipe and the hot water recovering external pipe. As the heat medium heated by the exhaust heat of the engine, for example, a conventionally well-known heat medium such as antifreeze liquid is used in addition to hot water. Since the change in the volume of this heat medium is smaller than that of the cooling medium, the diameters of the hot water supplying external pipe, the hot water supply sub pipe, the hot water recovering sub pipe, and the hot water recovering external pipe are substantially the same.

A cold air passage 12 is formed downstream of the cooling heat exchanger 7. The air having passed through the cold air passage 12 can pass a flow passage that bypasses the heating heat exchanger 9 and leads to the air mix chamber 13 or a flow passage that flows through the heating heat exchanger 9 and a hot air passage 11 and leads to the air mix chamber 13. By determining the appropriate positions of the first air mix door 10, the second air mix door 28, and the sub mix door 27, the ratio between the hot air and the cold air guided to the air mix chamber 13 is adjusted and the temperature of air blown from the vehicular air conditioning device 1 is conditioned.

On the downstream side of the air mix chamber 13, a defrost blowing opening 14, a bent blowing opening 15, and a foot blowing opening 16 are opened as appropriate in the air conditioning case 5 so as to face a vehicle cabin (not illustrated).

In addition, an air guide wall 17 for guiding air from the downstream side of the heating heat exchanger 9 to the foot blowing opening 16 is formed in the air conditioning case 5 and a foot side path 36 through which the air mix chamber 13 communicates with the foot blowing opening 16 is connected to the air mix chamber 13.

A foot door 22 for adjusting the amount of air toward the foot side path 36 is rotatably provided so as to face the region of the air mix chamber 13 positioned at the upper end of the air guide wall 17 described above.

In addition, on the downstream side of the air passage 4, a defvent side path 37 through which the air mix chamber 13 communicates with the defrost blowing opening 14 and the bent blowing opening 15 is connected to the air mix chamber 13.

In the region of the air mix chamber 13, which is closer to the upper part of the vehicle than the first air mix door 10 and the upper end of the air guide wall 17, a defvent side door 18 for adjusting the amount of air toward the defvent side path 37 is rotatably provided in an appropriate position.

The defrost blowing opening 14 and the bent blowing opening 15 are selectively opened and closed as appropriate by a defvent switching door 19 provided pivotably at the peripheral edge of the bent blowing opening 15.

In the embodiment of the invention, the foot door 22, the defvent side door 18, and the defvent switching door 19 described above constitute a mode door for adjusting the ratio between the amounts of air supplied to the blowing openings 14, 15, and 16.

In contrast, the intake unit 2 communicates with the air conditioning unit 3 via an air inlet (not illustrated) formed in the air conditioning case 5 and this air inlet faces an air inlet of a fan (not illustrated) of the blower unit 6.

In addition, in the intake unit 2, an outside air introduction port 21 and an inside air introduction port 60 are opened in the air conditioning case 5 and the introduction ports 21 and 60 have passages 26 and 20 extending toward the air inlets formed in the air conditioning case 5.

The outside air introduction port 21 described above is opened in the travel direction (the right direction in the sheet in Fig. 1) of the vehicle and the inside air introduction port 60 is opened obliquely downward in the travel direction of the vehicle below the outside air introduction port 21.

Mode switching between an outside air introduction (FRESH) mode and an inside air circulation (REC) mode is controlled by, for example, rotating an inside outside air switching door 25 of rotary type as appropriate.

Next, the following details the disposition of the cooling medium supplying sub pipe 71 and the cooling medium recovering sub pipe 72 in the air conditioning case 5 of the air conditioning unit 3 according to the embodiment of the invention having the above structure.

First, the air filter 8 according to the embodiment of the invention will be described.

The side surfaces of the air filter 8 according to the embodiment of the invention are reed-shaped and one of the side surfaces is illustrated in Fig. 1.

This air filter 8 is bent into a pleat having a wavelike cross section taken along the direction orthogonal to the longer edges of the side surface and the air filter 8 is disposed so that fold lines 8a and 8b extend in the direction (that is, the up and down direction of the vehicle) orthogonal to the direction (the direction orthogonal to the sheet in Fig. 1) in which the air filter 8 is attached and detached. The fold line 8a represents a mountain fold with respect to the upstream side of air flowing through the air conditioning case 5 and the fold line 8b represents a valley fold.

The attachment and detachment of the air filter 8 will be described. First, the vehicular air conditioning device 1 according to the embodiment of the invention is used for right-hand drive cars. When the air filter 8 is removed, the air filter 8 is pulled so as to be shifted in the direction orthogonal to the sheet in Fig. 1 away from the sheet. That is, the air filter 8 is pulled so as to be shifted in parallel toward the driver seat (to the right with respect to the travel direction of the vehicle).

However, there is a case in which part of the cooling medium supplying sub pipe 71 or the cooling medium recovering sub pipe 72 may be included (overlapping sections are included) in an attachment and detachment path (in the track of attachment and detachment) of the air filter 8, as illustrated in Fig. 1. The reason why avoidance of presence of overlapping sections is difficult is that, even when an attempt is made to dispose the cooling medium supplying sub pipe 71 and the cooling medium recovering sub pipe 72 above the attachment and detachment path, they interfere with the intake unit 2 or the blower unit 6. In addition, even when an attempt is made to dispose them below the attachment and detachment path, they interfere with the floor surface in the vehicle cabin. Alternatively, even when settings are made so that the air filter 8 is pulled out by shifting it in parallel toward the front passenger seat (to the left with respect to the travel direction of the vehicle), the hot water supply sub pipe and the hot water recovering sub pipe overlap. When the air filter 8 is attached to or detached from the air conditioning case 5, the air filter 8 needs to be contracted to avoid the cooling medium supplying sub pipe 71 and the cooling medium recovering sub pipe 72 (or the hot water supply sub pipe and the hot water recovering sub pipe).

Therefore, in this application, even when the cooling medium supplying sub pipe 71 and the cooling medium recovering sub pipe 72 have overlapping sections, these pipes are disposed in parallel with the attachment and detachment direction of the air filter 8, as described later.

Fig. 2 schematically illustrates the positional relationship between the cooling medium supplying sub pipe 71 and the cooling medium recovering sub pipe 72 that overlap with the attachment and detachment path of the air filter 8 in the state in which the air filter 8 is seen from the front side (see the hollow arrow in Fig. 1) of the vehicle so as to face the air filter 8. That is, as illustrated in Fig. 2, the cooling medium supplying sub pipe 71 is moved from the position indicated by the dotted line to the position indicated by the solid line. Although the air filter 8 conventionally needs to be contracted by the length (the length from the upper surface of the air filter 8 to the lower surface of the cooling medium supplying sub pipe 71) indicated by d1, the air filter 8 only needs to be contracted by the length indicated by d2 (the length from the upper surface of the air filter 8 to the lower surface of the cooling medium recovering sub pipe 72) in the invention.

Since the contraction length necessary for the attachment and detachment of the air filter 8 can be reduced as described above, even when disposition is made so that the fold lines of the air filter 8 extend in the direction (the up and down of the vehicle in Fig. 2) orthogonal to the attachment and detachment direction of the air filter 8 as described above, it can be used. Although disposition may be made so that the fold lines of the air filter 8 extend in the left and right direction of the vehicle, if dust is accumulated due to the use of the air filter 8, the weight of dust bends the fold lines downward, possibly causing a defect such as reduction in the efficiency of dust collection. When disposition is made so that the fold lines extend in the up and down direction of the vehicle, it is easy to keep the efficiency of dust collection high. Although contraction in the up and down direction becomes difficult in attachment and detachment with respect to the air conditioning case 5 when disposition is made so that the fold lines extend in the up and down direction of the vehicle, since attachment and detachment is enabled even when the contraction length is small in the structure of the application, the air filter 8 having fold lines extending in the up and down direction of the vehicle can be used even when the cooling medium supplying sub pipe 71 and the cooling medium recovering sub pipe 72 overlap with the attachment and detachment path.

In the embodiment of the invention, as illustrated in Fig. 2, the cooling medium recovering sub pipe 72 having a relatively large outer diameter is disposed in the vicinity of the air conditioning case 5 and the cooling medium supplying sub pipe 71 having a relatively small outer diameter is disposed away from the air conditioning case 5. Although an auxiliary case (not illustrated) may be set so as to cover the cooling medium supplying sub pipe 71 and the cooling medium recovering sub pipe 72, if the pipe having a large outer diameter is disposed in the vicinity of the air conditioning case 5, an increase in the size of the auxiliary case can be suppressed.

Next, the structures of the cooling medium supplying sub pipe 71 and the cooling medium recovering sub pipe 72 will be described.

The cooling medium supplying sub pipe 71 and the cooling medium recovering sub pipe 72 connected to the cooling heat exchanger 7 extend substantially orthogonally to a side surface 7a by an appropriate length from the part connected to one side surface 7a of the cooling heat exchanger 7, are bent at a right angle in the front direction of the vehicle, and then extend substantially linearly to a certain position between the air filter 8 and the air conditioning case 5 (see Fig. 1).

The cooling medium recovering sub pipe 72 is bent at a right angle in the direction orthogonal to the longer edges of the side surface 7a of the cooling heat exchanger 7 toward the front direction of the vehicle at a position closer to the cooling heat exchanger 7 than the cooling medium supplying sub pipe 71. On the other hand, the cooling medium supplying sub pipe 71 is bent at a right angle in the direction orthogonal to the longer edges of the side surface 7a of the cooling heat exchanger 7 toward the front direction of the vehicle at a position more distant from the cooling heat exchanger 7 than the cooling medium recovering sub pipe 72 (see Fig. 1).

The individual portions of the cooling medium supplying sub pipe 71 and the cooling medium recovering sub pipe 72 bent at a right angle in the front direction of the vehicle and extending in the front direction of the vehicle are disposed at least in the attachment and detachment path of the air filter 8 in parallel with the attachment and detachment direction of the air filter 8 and have overlapping sections (see Figs. 1 and 2).

The cooling medium supplying sub pipe 71 and the cooling medium recovering sub pipe 72 having extended substantially linearly to an appropriate position between the air filter 8 and the air conditioning case 5 is bent toward a position immediately before the expansion device 70 positioned closer to the lower part of the vehicle than the appropriate position, extends substantially linearly from the second position immediately before the expansion device 70, and is connected to the expansion device 70.

In Fig. 2, the hollow arrows to the left of the air filter 8 represent the attachment and detachment direction of the air filter 8 in a right-hand drive car. As illustrated in Fig. 2, part of the cooling medium supplying sub pipe 71 and the cooling medium recovering sub pipe 72 is disposed in parallel with the attachment and detachment direction of the air filter 8 in the part in which the pipes overlap with the attachment and detachment path of the air filter 8 as described above.

In contrast, the conventional device has the cooling medium supplying sub pipe 71 below the cooling medium recovering sub pipe 72, as illustrated by the dotted circle in Fig. 2. Accordingly, when the air filter 8 is attached and detached, the air filter 8 needs to be contracted in the direction (the up and down direction of the sheet in Fig. 2) of fold lines by the length (approximately the length indicated by d1 in Fig. 2) from the upper surface of the air filter 8 to the lower surface of the cooling medium supplying sub pipe 71 in order to perform attachment and detachment work.

In the attachment and detachment work of the air filter 8 according to the embodiment of the invention, although the air filter 8 needs to be contracted as before, the length of contraction can be reduced to the length (approximately the length indicated by d2 in Fig. 2) from the upper surface of the air filter 8 to the lower surface of the cooling medium recovering sub pipe 72. Accordingly, the contraction ratio of the air filter 8 becomes smaller than before and damage of the air filter 8 caused by the contraction is suppressed. In addition, the extent to which deodorant particles in the air filter 8 are scattered becomes smaller than before.

Although the vehicular air conditioning device of center-placed type has been described above, the invention is applicable to a vehicular air conditioning device of laterally-placed type in which air blown out from a blower unit flows in the lateral direction of the vehicle. In addition, although the cooling medium supplying sub pipe 71 and the cooling medium recovering sub pipe 72 are connected between the expansion device 70 and the cooling heat exchanger 7, these pipes may be connected to the expansion device 70 connected to the cooling heat exchanger 7. In addition, although the pipes that overlap with the attachment and detachment path are the cooling medium supplying sub pipe 71 and the cooling medium recovering sub pipe 72, the hot water supply sub pipe and the hot water recovering sub pipe may have overlapping sections and the pipes may be disposed in parallel with the attachment and detachment direction of the air filter 8.

### Industrial Applicability

The invention is applied to a vehicular air conditioning device for which the reduction range of a filter necessary for the attachment and detachment of the filter needs to be reduced.

### Reference Sign List

1: vehicular air conditioning device
3: air conditioning unit
4: air passage
7: cooling heat exchanger
8: air filter
70: expansion device
71: cooling medium supplying sub pipe
72: cooling medium recovering sub pipe

## Claims

1. A vehicular air conditioning device (1) **characterized by** comprising:
a case (5) having an air passage (4) therein;
a heat exchanger (7) disposed in the air passage, the heat exchanger exchanging heat between blown air flowing through the air passage and a heat medium;
a plurality of pipes (71, 72) supplying the heat medium to and recovering the heat medium from the heat exchanger (7); and
a filter (8) disposed in the air passage (4), the filter being attachable to and detachable from the case (5),
wherein the plurality of pipes (71, 72) have overlapping sections, respectively, included in an attachment and detachment path of the filter (8) and the overlapping sections of the plurality of pipes are disposed in parallel with an attachment and detachment direction of the filter.

2. The vehicular air conditioning device (1) according to claim 1,
wherein the filter (8) is bent into a pleat having a wavelike cross section and fold lines (8a, 8b) extend orthogonally to the attachment and detachment direction of the filter.

3. The vehicular air conditioning device (1) according to claim 2,
wherein the overlapping sections of the plurality of pipes (71, 72) extend in a front and rear direction of a vehicle, the attachment and detachment direction of the filter (8) is along a width direction of the vehicle, and the fold lines (8a, 8b) extend in an up and down direction of the vehicle.

4. The vehicular air conditioning device (1) according to any one of claims 1 to 3,
wherein the plurality of pipes (71, 72) having the overlapping sections disposed in parallel with the attachment and detachment direction of the filter are arranged in the descending order of outer diameters of the pipes in a direction away from the case.
